# EUROPÄISCHE PATENTSCHRIFT

(11) **EP 3 983 701 B1**
(45) Veröffentlichungstag und Bekanntmachung des Hinweises auf die Patenterteilung: **02.08.2023**
(21) Anmeldenummer: 20732562.2
(22) Anmeldetag: 10.06.2020
(51) Int. Cl.: F16H 25/24

(54) **LINEARANTRIEB**
LINEAR DRIVE
ENTRAÎNEMENT LINÉAIRE

(30) Priorität: 14.06.2019 DE 202019103358 U; 17.12.2019 DE 102019134752
(43) Veröffentlichungstag der Anmeldung: 20.04.2022
(73) Patentinhaber: DewertOkin KFT, 6000 Kecskemét (HU)
(72) Erfinder: VARGA, Zoltán, 6100 Kiskunfélegyháza (HU)
(74) Vertreter: Lippert Stachow Patentanwälte Rechtsanwälte
(86) Internationale Anmeldenummer: PCT/EP2020/066118
(87) Internationale Veröffentlichungsnummer: WO 2020/249628

(56) Entgegenhaltungen:
- DE-A1- 4 244 642
- DE-A1-102007 043 984
- DE-A1-102013 108 031
- DE-C2- 4 244 642
- DE-U1-202018 100 747

## Beschreibung

Die Erfindung betrifft einen Linearantrieb mit einem eine Schnecke antreibenden Elektromotor, einem von der Schnecke gekämmten Schneckenrad, das sich entlang einer Getriebelängsachse erstreckt und drehfest mit einer Spindel verbunden ist, die ein hinteres und ein vorderes Stirnende aufweist. Auf dieser läuft eine mit einem Hubrohr verbundene Spindelmutter. Das Hubrohr ist längsverschieblich in einem Führungsrohr aufgenommen und über das Getriebe zwischen einer eingefahrenen Einfahrstellung und einer ausgefahrenen Ausfahrstellung verstellbar. Schließlich weist das Schneckenrad einen hinteren Lagersitz mit einem darauf angeordneten Lager auf, mit dem das Schneckenrad in einem umgebenden Getriebegehäuse gelagert ist, wobei das hintere Lager als Festlager ausgebildet ist.

Ein derartiger Linearantrieb wird vorzugsweise verwendet für das automatische Verstellen von beweglich gelagerten Teilen von Liege- und Sitzmöbeln, also Möbelstücken, insbesondere zum automatischen Verstellen eines Kopf- und Fußteils eines Krankenbettes.

Das Schneckenrad weist somit einen Lagersitz auf, auf welchem das Lager sitzt und ist mit einem Innengewinde zur drehfesten Aufnahme der Spindel versehen.

Üblicherweise ist das Lager als Kugellager ausgebildet. Am vorderen Ende ist das Schneckenrad über ein weiteres Lager in dem Gehäuse gelagert, welches üblicherweise ebenfalls als Kugellager ausgebildet ist.

Die drehfeste Befestigung der Spindel in dem diese aufnehmenden Schneckenrad, welches vorzugsweise aus Kunststoff besteht, erfolgt entweder über einen Presssitz oder durch Einschlagen von Stiften in Rillen bzw. Ausnehmungen, die am hinteren Stirnende der Spindel ausgebildet sind, wie beispielsweise in DE 10 2007 043 984 A1 beschrieben.

Auf diese Weise kann die Spindel Zug- und Druckkräfte aufnehmen und über das hintere Lager in das umgebende Gehäuse einleiten.

Ein derartiger Linearantrieb ist zudem aus der WO 2004071244 A1 bekannt. Bei diesem Linearantrieb ist das Schneckenrad über ein hinteres Kugellager und ein vorderes Kugellager in dem Gehäuse gelagert, wobei das hintere Lager als Festlager und das vordere Lager als Loslager ausgebildet ist. Der Au-βenring des hinteren Lagers liegt an einer innenseitigen Schulter des Gehäuses an, so dass Axialkräfte der Spindel über das hintere Lager in das Gehäuse geleitet werden.

Bei einem in DE4244642 A1 beschriebenen Spindelelement ist vorgesehen, die Spindelwelle einseitig abzudrehen und einen Zapfenabsatz auszubilden, auf den das Lagerelement aufgepresst wird. Dazu muss nicht nur einfach das Gewinde von dem als Zapfen vorgesehenen Ende abgedreht werden, sondern es muss dabei auch ein toleranzbehafteter Außendurchmesser gefertigt werden, um eine Presspassung mit dem Lager ausbilden zu können. Anschließend soll dann auch noch das Schneckenrad auf einen Abschnitt der Spindel aufgepresst werden, wozu eine weitere spanende Bearbeitung des entsprechenden Abschnitts der Spindelwelle notwendig ist. Ein überstehender Restabschnitt des Lagerzapfens soll durch Taumelnieten vergrößert werden, um als zusätzliche axiale Sicherung des Lagers zu dienen und den Gebrauch eines Sicherungsrings zu vermeiden. Die Fertigung der Spindelwelle ist somit aufwendig.

### Nachteile am Stand der Technik

Diese Ausgestaltung des Linearantriebs wird heutigen Ansprüchen für eine effiziente Herstellung nicht mehr vollumfänglich gerecht, weil für die drehfeste Verbindung zwischen der Spindel und dem Schneckenrad aus Kunststoff vom hinteren Stirnende der Spindel Längsschlitze in das äußere Trapezgewinde gefräst werden müssen, in die nach Aufschrauben des Schneckenrads Sicherungsstifte eingeschlagen werden, welche die Gewindegänge des Schneckenrads eingreifen. Diese spanende Bearbeitung ist zeit- und damit kostenintensiv. Das gilt auch für die Fertigung von Rändeln und toleranzbehafteten Absätzen an der Spindelwelle, um Schneckenrad und Lager durch Aufpressen drehfest damit verbinden zu können.

### Aufgabe

Ausgehend von dem eingangs genannten Stand der Technik und den damit verbundenen Nachteilen liegt der Erfindung die Aufgabe zugrunde, die Nachteile zumindest teilweise zu vermeiden und insbesondere die Herstellung des Linearantriebs einfacher und kostengünstiger zu gestalten.

### Erfindung

Diese Aufgabe lösen die Merkmale der unabhängigen Ansprüche 1 und 8. Bevorzugte, aber nicht zwingende Merkmale sind in den Unteransprüchen wiedergegeben.

Erfindungsgemäß ist eine Sicherungsscheibe auf dem hinteren Stirnende der Spindel aus einem schweißbaren Werkstoff angeordnet, so dass die Sicherungsscheibe bei einer ersten Ausführungsform flächig an dem hinteren Stirnende anliegt. Die Sicherungsscheibe ist an der Anlagefläche mit der Spindel stoffschlüssig verbunden. Die Sicherungsscheibe stellt insofern die einzige Sicherung des hinteren Lagers auf dem Schneckenrad dar und realisiert gleichzeitig die drehfeste Verbindung der Spindel und des Schneckenrads.

Nach einer ersten Ausführungsform der Erfindung gemäß den Merkmalen des Anspruchs 1 ist die Sicherungsscheibe an das hintere Stirnende der Spindel angesetzt und liegt mit einem stirnseitigen Anlagebereich an dem Stirnende der Spindel an. Somit werden für die Fertigung weniger Arbeitsschritte benötigt. Es muss lediglich die Spindel, die vorzugsweise als Stahlspindel ausgebildet ist, auf die entsprechende Länge gekürzt und stoffschlüssig mit der Sicherungsscheibe verbunden werden. Ist eine Spindel entsprechender Länge bereits vorgesehen, muss nur noch die stoffschlüssige Verbindung realisiert werden.

Eine schnelle Fertigung und haltbare Realisierung der stoffschlüssigen Verbindung zwischen der Sicherungsscheibe und der Spindel wird bevorzugt durch Widerstandsstumpfschweißen realisiert, was besonders gut für automatisierte Fertigung einsetzbar ist.

Soll die stoffschlüssige Verbindung unter Einsatz eines Zusatzwerkstoffs erfolgen, weist die Sicherungsscheibe vorzugsweise eine Zentralöffnung auf, die in der Mitte der Sicherungsscheibe ausgebildet ist und auch ermöglicht, einen Schweißbrenner in diese Zentralöffnung einzuführen, um die Sicherungsscheibe stirnseitig am Stirnende der Spindel festzuschweißen.

Die Zentralöffnung erstreckt sich also durchgängig von der in Einbaulage äußeren Oberfläche bis zur in Einbaulage inneren Oberfläche.

Wenn eine Zentralöffnung vorgesehen ist, erfolgt das Verschweißen beim Widerstandsstumpfschweißen nur im Bereich der Überdeckung, also der stirnseitigen, ringförmigen Anlagefläche zwischen dem äußeren Radius der Stahlspindel und dem Radius der Zentralöffnung, also nur in dem Ringbereich, an dem die Sicherungsscheibe stirnseitig an der Spindel anliegt. Der durch diese Überdeckung erzeugte Verbindungsbereich reduziert bei Belastung die Scherspannung in der Schweißnaht bei Betätigung der Spindel, was mögliche Fehler beim Schweißen ausreichend kompensiert. Gleichzeitig wird aber im Verhältnis zu der Ausbildung der Sicherungsscheibe ohne Zentralöffnung die Schweißzeit reduziert, weil weniger Material erwärmt werden muss.

Die mittige Zentralöffnung erstreckt sich bevorzugt in Längserstreckungsrichtung durchgehend von der vorderen Fläche zur hinteren Fläche. Somit wird in Einbaulage zwischen dem äußeren Radius der Spindel und dem Innenradius der Zentralöffnung der Überdeckungsbereich zwischen der Stirnfläche der Spindel und der Stirnfläche der Sicherungsscheibe gebildet, mit welchem die Sicherungsscheibe in Einbaulage stirnseitig an dem hinteren Stirnende der Stahlspindel anliegt und in diesem Bereich stoffstoffschlüssig mit der Spindel verbunden ist.

Für die Verbindung der Sicherungsscheibe mit der Spindel wird bei der Montage des Linearantriebs, also dem Aufsetzen des Schneckenrads auf das hintere Ende der Spindel, das hintere Lager auf den Lagersitz des Schneckenrads aufgesetzt. Sodann wird die Spindel von Backen eingefasst bzw. gehalten, was vorzugsweise am vorderen Ende der Spindel erfolgt. Sodann wird die Sicherungsscheibe auf das hintere Stirnende der Spindel aufgesetzt, und ein Kupferdorn drückt die Sicherungsscheibe gegen die hintere Stirnfläche der Spindel. Sodann wird ein Strom zwischen 500 und 800 Ampere für 1,5 bis 2 Sekunden aufgebracht, so dass sich der Stahl im Anlagebereich der Überdeckung teigig verflüssigt und sich die Spindel mit der Sicherungsscheibe unlösbar verbindet. Durch die Kombination des hohen Stroms und kurzer Zeit wird wirksam eine ungewollte Beschädigung der umgebenden Kunststoffteile, insbesondere des Schneckenrads, vermieden. Nach kurzer Abkühlphase werden die Backen geöffnet und der Dorn entfernt.

Ein noch schnellerer und verlässlicher Schweißprozess ist durch Verwendung einer Ringelektrode realisierbar, deren Dimension im Wesentlichen der Überdeckung entspricht also beim Schweißen außenseitig im Bereich der Überdeckung an der Sicherungsscheibe anliegt.

Vorzugsweise beträgt die Überdeckung mehr als 30 Prozent, noch besser mehr als 50 Prozent oder sogar mehr als 60 Prozent der gesamten Stirnfläche der Spindel, womit also auch stärkere Drehmomente und Axialkräfte aufgenommen werden können.Bei einer alternativen Ausführungsform der Erfindung gemäß den Merkmalen des Anspruchs 8 ist die Zentralöffnung innerhalb der Sicherungsscheibe ausreichend groß, damit das hintere Ende der Spindel mit einem Durchsteckabschnitt durch die Zentralöffnung hindurchtreten kann, die Sicherungsscheibe also auf das hintere Ende der Spindel aufsteckbar ist. Dazu kann ein Sitz, auch mit einem Absatz für die Sicherungsscheibe an der Spindel vorgesehen sein, damit diese nur in einem gewünschten Maß aufgeschoben werden kann. Bevorzugt ragt das hintere Ende der Spindel in Einbaulage mit etwa 3 - 4 mm durch die Zentralöffnung hindurch. Durch den Durchsteckabschnitt, also das durch die Zentralöffnung hindurch ragende hintere Ende der Spindel ist es bei dieser Ausführungsform möglich, diesen vorstehenden Abschnitt mittels Taumelnieten formschlüssig mit der Sicherungsscheibe zu verbinden. Dabei dehnt sich der hintere, überragende Abschnitt der Spindel über den Innenrand der Zentralöffnung der Sicherungsscheibe aus und überspannt oder überragt somit den Innenrand der Zentralöffnung in der Form eines Pilzes, also radial nach außen abflachend, weshalb dieses auch schlagwortartig als "Verpilzen" bezeichnet wird.

Bevorzugt ist die Zentralöffnung der Sicherungsscheibe rund ausgebildet. Eine alternative Ausführungsform sieht vor, dass die Zentralöffnung der Sicherungsscheibe profiliert oder leicht unrund ausgebildet ist, also eine zentrische und unrunde Öffnung aufweisen, um eine bessere Formschlussmitnahme an der Mantelfläche der Zentralöffnung mit der Spindel zu realisieren, insbesondere wenn die Sicherungsscheibe auf die Spindel aufgeschoben und mit dieser verpilzt wird. Beim Taumelnieten pilzt das hintere Ende der Spindel derart auf, dass eine formschlüssige Verbindung zwischen der Spindel und des Innenprofils der Sicherungsscheibe realisiert wird.

Zum Vereinfachen der Montage beim Aufstecken der Sicherungsscheibe auf das hintere Ende der Spindel kann es vorteilhaft sein, zwischen der Zentralöffnung und der Spindel ein leichtes Spiel vorzusehen, wobei sich ein Spiel von etwa 0,2 mm als besonders vorteilhaft erwiesen hat.

Die so realisierte Verbindung ist so stabil, dass nur noch ein Lager für die Lagerung des Getriebes in dem Getriebegehäuse erforderlich ist, nämlich das hintere, welches zum hinteren Gabelkopf angeordnet ist. Dieses hintere Lager liegt mit seinem Innenring auf der dem Schneckenrad zugewandten Seite direkt an einer Schulter des Schneckenrads an und wird von seiner Außenseite von der Sicherungsscheibe gehalten.

Auch der Außenring des hinteren Lagers liegt bevorzugt beidseitig an dem aufnehmenden Gehäuse an, sitzt also vorzugsweise beidseitig an Anschlägen des Gehäuses, vorzugsweise in einem entsprechend ausgebildeten Lagersitz des Gehäuses, der rinnenförmig ausgebildet sein kann. Da nur noch das hintere Lager benötigt wird, ist der Aufbau des Linearantriebs deutlich einfacher, leichter und schneller zu montieren, insofern weniger fehleranfällig gegen Montagefehler und deutlich kompakter.

Zur Verbesserung der Drehmomentübertragung von dem Schneckenrad auf die Spindel sind zwischen der Sicherungsscheibe und dem Schneckenrad in Einbaulage komplementär wirkende Formschlussverbindungsmittel ausgebildet.

Bevorzugt umfassen diese Formschlussverbindungsmittel mindestens ein komplementär ausgebildetes Paar aus der Gruppe Vorsprung und Ausnehmung bzw. Öffnung. Bevorzugt ist an einer äußeren Umfangsfläche der Sicherungsscheibe mindestens eine Ausnehmung vorgesehen, in welche ein komplementär ausgebildeter Vorsprung des Schneckenrads eingreift.

Eine besonders gleichmäßige Drehmoments- bzw. Kraftübertagung wird realisiert, indem die Sicherungsscheibe an der äu-βeren Umfangsfläche zwei, vorzugsweise diametral gegenüberliegende Ausnehmungen aufweist, in welche komplementär ausgebildete Vorsprünge des Schneckenrads eingreifen.

Bevorzugt schließt sich der mindestens eine Vorsprung nach hinten erstreckend an einen an dem Schneckenrad ausgebildeten Lagersitz mit einer Schulter für das hintere Lager an.

Bei der bevorzugten Ausführungsform ist das Schneckenrad mit einem Innenprofil versehen, welches besonders bevorzugt als zum Außengewinde der Spindel komplementäres Innengewinde ausgebildet ist. Diese Gewindeverbindung überträgt zumindest die axialen Verstellkräfte von der Spindel über einen Anschlag dieses Lagersitzes auf den Innenring des hinteren Lagers und somit auf das Gehäuse bzw. einen Gabelkopf im Gehäuse.

Obgleich der vorgeschlagene Linearantrieb nur das hintere Festlager für die Funktionsfähigkeit benötigt, kann die Standzeit und Laufruhe gleichwohl dadurch verbessert werden, dass das Schneckenrad ein vorderes Lager aufweist, das zwischen dem Schneckenrad und dem Führungsohr bzw. der Spindelmutter angeordnet ist. Dieses vordere Lager kann aber besonders als Gleitlager klein ausgebildet sein, z.B. durch einen Steg oder ein Lagerauge, welches als Loslager ausgebildet das Schneckenrad vorderseitig in dem Gehäuse lagert.

Der Linearantrieb wird bevorzugt als Möbelantrieb eingesetzt, besonders bevorzugt zum Verstellen eines schwenkbaren Kopf- oder Fußteils eines Krankenbetts. Für den Fachmann ist verständlich, dass dieser allgemein zum Verstellen von mechanischen Einrichtungen aller Art einsetzbar ist, insbesondere zum Verstellen eines beweglichen Bauteils im Verhältnis zu einem stationären Bauteil oder zu einem anderen beweglichen Bauteil.

Der erfindungsgemäße Linearantrieb wird nachfolgend beispielhaft anhand der Figuren beschrieben. Sämtliche Merkmale des Linearantriebs seien hierbei für sich eigenständig und unabhängig von anderen Merkmalen offenbart.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, "und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Es zeigen:
- Figur 1: eine isometrische Ansicht des Linearantriebs von vorne,
- Figur 2: einen Längsschnitt des Linearantriebs gemäß Figur 1;
- Figur 3: eine isometrische vergrößerte Ansicht der Baugruppe umfassend die auf das hintere Ende der Spindel aufgesetzte Spindelmutter, das aufgesetzte hintere Lager und die mit der Spindel verbundene Sicherungsscheibe;
- Figur 4: eine isometrische Explosionsdarstellung der Baugruppe gemäß Figur 3;
- Figur 5: eine isometrische vergrößerte Ansicht einer alternativen Ausführungsform der Baugruppe umfassend die auf das hintere Ende der Spindel aufgesetzte Spindelmutter, das aufgesetzte hintere Lager und die mit der Spindel verbundene Sicherungsscheibe
- Figur 6: eine isometrische Explosionsdarstellung der Ansicht gemäß Figur 5; und
- Figur 7: zeigt eine Stirnansicht der Sicherungsscheibe der Ausführungsform gemäß den Figuren 5 und 6.

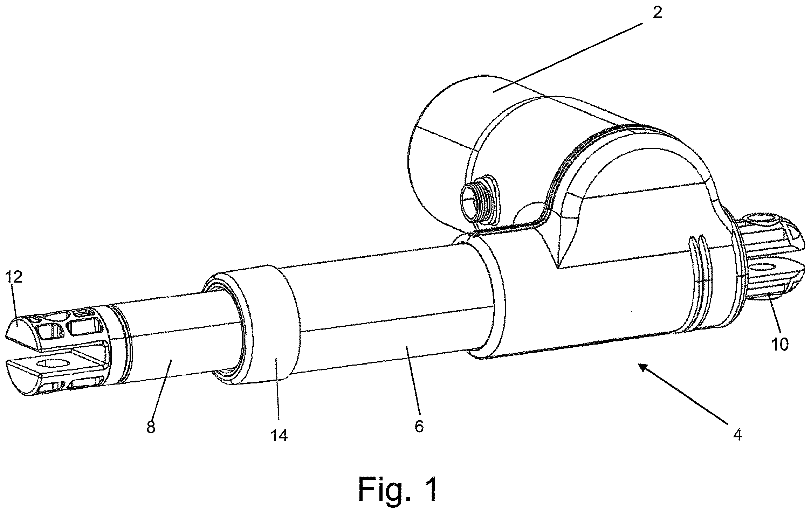

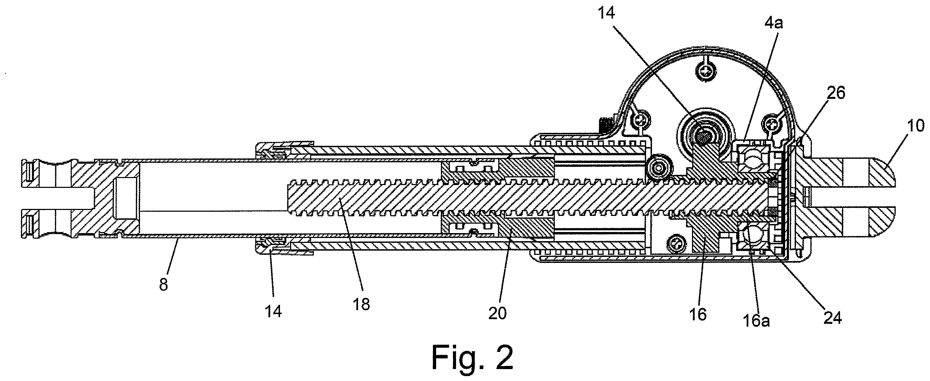

Demnach besteht der in seiner Gesamtheit in den Figuren 1 und 2 dargestellte Linearantrieb im Wesentlichen aus einem Elektromotor, aufgenommen in einem Motorgehäuse 2, welches sich quer zu einem Getriebegehäuse 4 erstreckt.

In einem vorderen Ende des Getriebegehäuses 4 ist ein Führungsrohr 6 aufgenommen, das seinerseits relativbeweglich ein Hubrohr 8 aufnimmt, das mittels einer auf einer Spindel verstellbaren Spindelmutter entlang einer Längsachse des Linearantriebs verstellbar ist. So kann dieses aus einer in das Führungsrohr 6 eingefahrenen Endlage in eine aus dem Führungsrohr ausgefahrenen Endlage über das in dem Linearantrieb aufgenommene Getriebe axial entlang der Längsachse des Linearantriebs verstellt werden.

Auf dem vorderen Ende des Führungsrohrs 6 sitzt ein Dichtkopfstück 14, welches Wassereintritt zwischen Führungs- 6 und Hubrohr 8 unterbindet.

In das hintere Ende des Getriebegehäuses 4 ist ein hinterer Gabelkopf 10 eingesetzt oder alternativ daran angeformt. An dem vorderen Ende des Hubrohrs 8 ist ein vorderer Gabelkopf 12 befestigt. Über diesen Gabelkopf 10, 12 wird der Linearantrieb beispielsweise zwischen dem unterseitigen Rahmen eines Bettes und einem zu verstellenden, schwenkbaren Rahmenteil, z.B. einem Kopf- oder Fußteil eingespannt bzw. mit Streben befestigt, die somit gegeneinander verstellt werden können, indem das Hubrohr 8 aus dem Führungsrohr 6 ausgefahren und wieder in dieses eingefahren wird.

Die Figur 1 zeigt den Linearantrieb bei teilweise ausgefahrenem Hubrohr 8.

Gemäß Figur 2 erfolgt das Verstellen des Hubrohrs 8 über den in dem Motorgehäuse 2 aufgenommenen Elektromotor, welcher eine Welle mit einer darauf endseitig angeordneten Schnecke 14 antreibt, die ihrerseits in bekannter Weise ein Schneckenrad 16 kämmt. Eingesetzt in dieses Schneckenrad 16 ist eine Stahlspindel 18, auf der eine Spindelmutter 20 läuft, die mit dem Hubrohr 8 verbunden ist.

Das Schneckenrad 16 weist an einem hinteren, vom dem Hubrohr 6 abgewandten Ende einen hinteren Lagersitz 16a auf, auf dem der Innenring eines Lagers 24 sitzt, dessen Außenring in dem umgebenden Getriebegehäuse 4 aufgenommen ist. Der Außenring des Lagers 24 sitzt in einer Lageraufnahme 4a des Getriebegehäuses 4, welche einen beidseitigen Anschlag für den Au-βenring des Lagers 24 bildet, so dass dieses also fest in dem Getriebegehäuse 4 aufgenommen ist und sowohl Radialalso auch Axialkräfte aufnehmen und übertragen kann. Dieses als Festlager ausgebildete Lager 24 kann somit das einzige Lager zur Lagerung der Spindel 26 mit dem Schneckenrad 16 in dem Getriebegehäuse 4 darstellen.

Die Befestigung des Lagers 24 erfolgt über eine stoffschlüssig mit dem hinteren Stirnende der Spindel verschweißte Sicherungsscheibe 26, die bevorzugt ebenfalls aus Stahl besteht und deren Außendurchmesser vorliegend größer ist als der Außendurchmesser der Stahlspindel 18 und des Lagersitzes 16a.

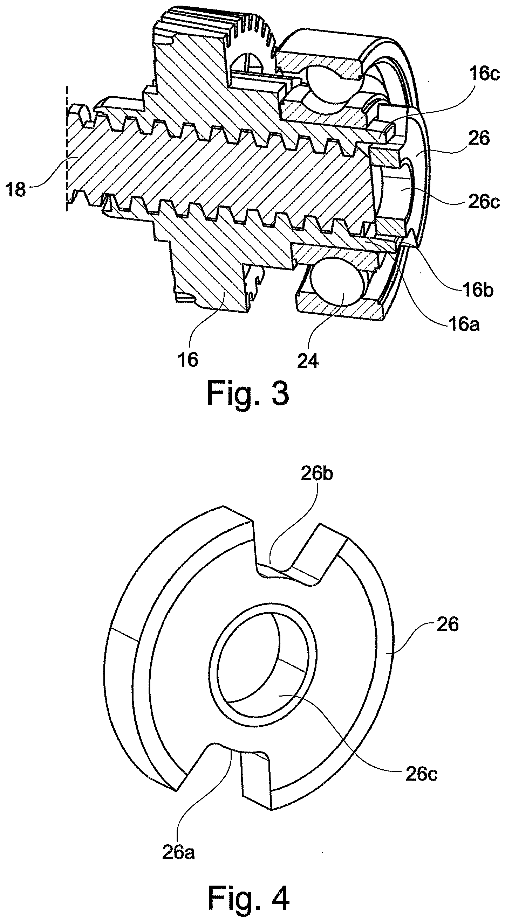

Diese auch in der Explosionsdarstellung gemäß Figur 4 isometrisch dargestellte Sicherungsscheibe 26 weist in der äu-βeren Umfangsfläche diametral gegenüberliegend zwei Ausnehmungen 26a, 26b auf, in welche zwei komplementäre, stiftartige Vorsprünge 16b, 16c am hinteren Ende des Lagersitzes 16a eingreifen und somit gleichzeitig die drehfeste Verbindung zwischen Spindel 26 und Schneckenrad 16 realisieren. Die Sicherungsscheibe weist ferner eine mittige Zentralöffnung 26c auf, welche sich in Längserstreckungsrichtung durchgehend von der vorderen Fläche zur hinteren Fläche erstreckt. Somit wird zwischen dem äußeren Radius der Spindel und dem Innenradius der Zentralöffnung 26c der Überdeckungsbereich zwischen der Stirnfläche der Spindel und der Stirnfläche der Sicherungsscheibe gebildet, mit welchem die Sicherungsscheibe 26 in Einbaulage stirnseitig an dem hinteren Stirnende der Stahlspindel anliegt und in diesem Bereich stoffstoffschlüssig mit der Spindel verbunden ist. Somit bildet der Bereich zwischen der äußeren Umfangsfläche der Stahlspindel 18 und der inneren Umfangsfläche der Zentralöffnung die Überdeckung, also die ringförmige Fläche, an welcher die Stahlspindel 18 stirnseitig an der Innenfläche der Sicherungsscheibe 26 anliegt.

Die Betätigung der Schnecke 14 über den Elektromotor bewirkt somit eine Drehung des Schneckenrads 16 und der darin drehfest aufgenommenen Stahlspindel 18, wodurch sich die mit einem komplementären Innengewinde ausgebildete Spindelmutter 20 auf der Spindel 18 innerhalb des stationären Führungsrohrs 6 verstellt. Mitunter ist es möglich, dass dieser Überdeckungsbereich durch die Ausnehmungen 26a, 26b zumindest abschnittsweise unterbrochen ist. Dieses tut der Haltbarkeit aber keinen Abbruch.

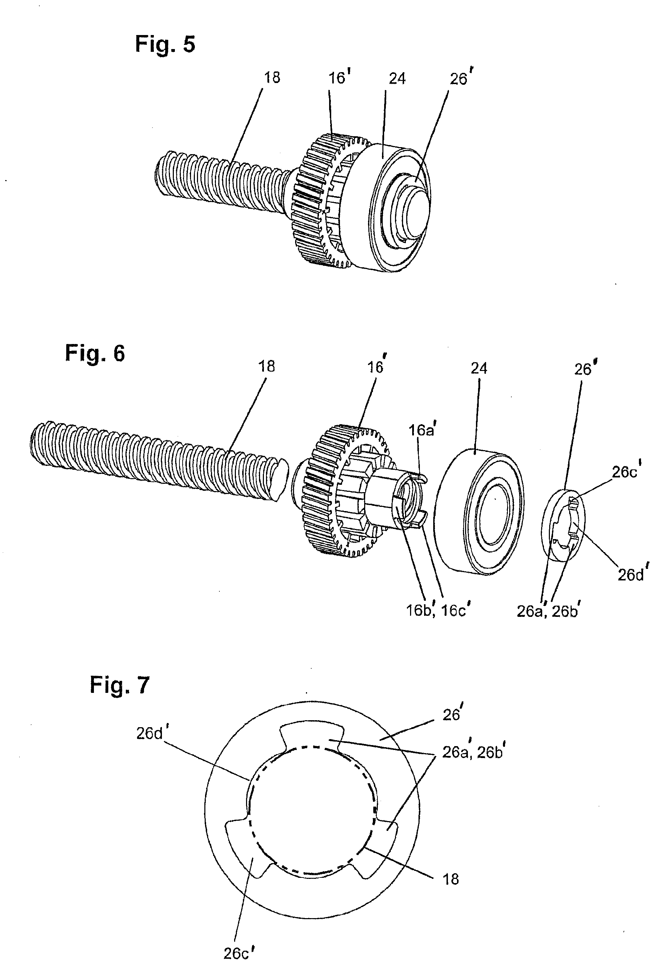

Gemäß der Ausführungsform nach Figur 5 ist eine Sicherungsscheibe 26' mit ihrer Zentralöffnung auf einen Aufsetzabschnitt des hinteren Endes der Spindel 18 aufgesetzt. Die Spindel 18 ragt dabei durch die Zentralöffnung hindurch und ist mittels Taumelnieten mit der Sicherungsscheibe 26 formschlüssig verbunden. Die Figur 5 zeigt dies durch die pilzartige Vergrößerung des äußeren Durchmessers der Spindel 18 an ihrem freien Ende unmittelbar neben der Sicherungsscheibe 26'.

Die Explosionsdarstellung in Figur 6 illustriert die zur Montage anstehende Baugruppe gemäß der Figur 5.

Dabei ist die Spindel 18 ausschließlich abgesägt und ihr Stirnende liegt in einem weitgehend gratfreien Zustand vor. Gut zu erkennen ist die Sicherungsscheibe 26`, welche in diesem Ausführungsbeispiel mit drei radial nach außen gehenden, umfänglich zueinander beabstandeten Ausnehmungen 26a`, 26b', 26c versehen ist, welche sich um die Zentralöffnung 26d` gleichmäßig verteilen. Die Zentralöffnung 26d ist dabei eingerichtet, unmittelbar auf die Gewindegänge der Spindel 18 gesetzt zu werden.

In einer anderen, nicht näher dargestellten Ausführungsform weist die Spindel am hinteren Ende einen im Durchmesser reduzierten Absatz auf, mit welchem die Zentralöffnung 26d korrespondiert.

Ferner zeigt die Figur 6 drei Vorsprünge 16a', 16b, 16c, welche an ein Schneckenrad 16' im Bereich des Lagersitzes in Axialrichtung erstreckend umfangsseitig beabstandet zueinander vorgesehen sind, insbesondere einstückig angeformt sind. Diese Vorsprünge 16a', 16b', 16c` greifen nach erfolgter Montage in die Ausnehmungen 26a', 26b', 26c` so dass eine drehfeste Verbindung zwischen Schneckenrad 16' und Sicherungsscheibe 26' hergestellt ist. Nicht zu erkennen ist hier das Innengewinde des Schneckenrades 16, wie es die Ansichten gemäß den Figuren 2 und 3 zeigen. Zur Montage wird das Schneckenrad 16 auf die Spindel 18 geschraubt. Das Innengewinde des Schneckenrades 16' und das Außengewinde der Spindel 18 bilden nach erfolgter Montage eine spielfreie Verbindung, so dass Axialkräfte in Längsrichtung der Spindel 18 auf das Schneckenrad 16 und dessen Lagersitz übertragen werden können.

In Figur 7 ist die Sicherungsscheibe 26' mit Blickrichtung auf die hintere Stirnfläche dargestellt. Die drei Ausnehmungen 26a', 26b`, 26c` sind im gleichmäßigen Winkelversatz, radial nach außen ragend um die Zentralöffnung angeordnet. Ferner ist der äußere Durchmesser der Spindel 18 durch eine Strichpunktlinie dargestellt, und man kann erkennen, dass zwischen dem Außendurchmesser der Spindel und der lichten Weite der Zentralöffnung ein geringfügiges Spiel zur vereinfachten Montage der Sicherungsscheibe 26` auf der Spindel 18 besteht. Auch gut zu erkennen ist die Zentralöffnung 26d` mit einem unrunden Innenquerschnitt. Zwischen den Ausnehmungen 26a', 26b', 26c' ist die Innenkontur der Sicherungsscheibe 26' im Wesentlichen zwar rund, jedoch sind diese Abschnitte mit einem geringeren Radius als der der Spindel 18 ausgebildet. Die Zentralöffnung 26d` der Sicherungsscheibe 26' ist somit mit weiteren Profilierungen versehen und somit unrund ausgebildet. Während der Montage und insbesondere während des Taumelnietprozesses weitet sich der Außendurchmesser der Spindel 18 und schmiegt sich an die Profilierungen beziehungsweise an die Unrundheiten der Zentralöffnung 26d' derart an, dass nach erfolgter Montage eine formschlüssige und drehfeste Verbindung zwischen der Spindel 18, über die Sicherungsscheibe 26' bis hin zum Schneckenrad 16' gegeben ist. Zugleich ist eine formschlüssige und in Längsrichtung der Spindel 18 verschiebefeste Verbindung zwischen Sicherungsscheibe 26' und Spindel 18 gebildet, so dass der Innenring des Lagers 24 beidseitig, sowohl durch die Schulter des Schneckenrades 16' einerseits als auch durch die Sicherungsscheibe 26` andererseits, festgelegt ist und relativ zur Spindel 18 als Festlager einzuordnen ist.

### Bezugszeichenliste

- 2: Motorgehäuse
- 4: Getriebegehäuse
- 4a: Lageraufnahme
- 6: Führungsrohr
- 8: Hubrohr
- 10, 12: Gabelkopf
- 14: Dichtkopfstück
- 16: Schneckenrad
- 16a: Lagersitz
- 16b, 16c: Vorsprung
- 16': Schneckenrad
- 16a', 16b', 16c`: Vorsprung
- 18: Stahlspindel
- 20: Spindelmutter
- 24: Lager
- 26: Sicherungsscheibe
- 26a, 26b: Ausnehmung
- 26c: Zentralöffnung
- 26': Sicherungsscheibe
- 26a', 26b', 26c`: Ausnehmung
- 26d`: Zentralöffnung

## Patentansprüche

1. Linearantrieb mit einem eine Schnecke (14) antreibenden Elektromotor,
einem von der Schnecke (14) gekämmten Schneckenrad (16), das drehfest mit einer sich entlang einer Linearantriebslängsachse bzw. Drehachse erstreckenden Spindel (18) verbunden ist, die ein hinteres und ein vorderes Stirnende aufweist,
einer mit einem Hubrohr (8) verbundenen und auf der Spindel (18) laufenden Spindelmutter (20), einem das Hubrohr (8) relativbeweglich aufnehmenden Führungsrohr (6), wobei das Hubrohr (8) aus einer in das Führungsrohr (6) eingefahrenen Einfahrstellung in eine aus diesem Führungsrohr (6) ausgefahrenen Ausfahrstellung verstellbar ist, wobei das Schneckenrad (16) einen Lagersitz (16a) für ein hinteres Lager (24) aufweist, mit dem das Schneckenrad (16) in einem umgebenden Getriebegehäuse (4) gelagert ist, wobei das hintere Lager als Festlager ausgebildet ist,
**DADURCH GEKENNZEICHNET, DASS** eine Sicherungsscheibe (26) auf dem hinteren Stirnende der Spindel (18) angeordnet ist,
wobei die Sicherungsscheibe (26) die einzige Sicherung des hinteren Lagers (24) auf dem Schneckenrad (16) darstellt und gleichzeitig die drehfeste Verbindung der Spindel (18) und des Schneckenrads (16) herstellt, und
dass die Spindel (18) aus einem schweißbaren Werkstoff besteht, und dass die Sicherungsscheibe (26) stoffschlüssig durch Schweißen mit der Spindel (18) verbunden ist.

2. Linearantrieb nach Anspruch 1, **DADURCH GEKENNZEICHNET, DASS** die Sicherungsscheibe (26) eine Zentralöffnung (26c) aufweist, so dass die Sicherungsscheibe (26) in einem umfänglichen Randbereich flächig an dem hinteren Stirnende der Spindel (18) zur Bildung einer Überdeckung anliegt.

3. Linearantrieb nach Anspruch 1 oder 2, **DADURCH GEKENNZEICHNET, DASS** die stoffschlüssige Verbindung durch Widerstandsstumpfschweißen realisiert ist.

4. Linearantrieb nach Anspruch 1 oder 2, **DADURCH GEKENNZEICHNET, DASS** die stoffschlüssige Verbindung durch Schweißen mit einem Zusatzwerkstoff erfolgt.

5. Linearantrieb nach einem der Ansprüche1 bis 4, **DADURCH GEKENNZEICHNET, DASS** zwischen der Sicherungsscheibe (26) und dem Schneckenrad (16) mindestens eine in Einbaulage einander greifende Paarung aus Vorsprung und komplementärer Ausnehmung bzw. Öffnung vorgesehen ist.

6. Linearantrieb nach Anspruch 5, **DADURCH GEKENNZEICHNET, DASS** an einer äußeren Umfangsfläche der Sicherungsscheibe (26) mindestens eine Ausnehmung (26a, 26b) vorgesehen ist, in welche in Einbaulage ein komplementär ausgebildeter Vorsprung (16b, 16c) des Schneckenrads (16) eingreift.

7. Linearantrieb nach Anspruch 6, **DADURCH GEKENNZEICHNET, DASS** die Sicherungsscheibe (26) an der äußeren Umfangsfläche zwei diametral gegenüberliegende Ausnehmungen (26a, 26b) aufweist, in welche komplementär ausgebildete Vorsprünge (16b, 16c) des Schneckenrads (16) eingreifen.

8. Linearantrieb mit einem eine Schnecke (14) antreibenden Elektromotor,
einem von der Schnecke (14) gekämmten Schneckenrad (16), das drehfest mit einer sich entlang einer Linearantriebslängsachse bzw. Drehachse erstreckenden Spindel (18) verbunden ist, die ein hinteres und ein vorderes Stirnende aufweist,
einer mit einem Hubrohr (8) verbundenen und auf der Spindel (18) laufenden Spindelmutter (20),
einem das Hubrohr (8) relativbeweglich aufnehmenden Führungsrohr (6), wobei das Hubrohr (8) aus einer in das Führungsrohr (6) eingefahrenen Einfahrstellung in eine aus diesem Führungsrohr (6) ausgefahrene Ausfahrstellung verstellbar ist, wobei das Schneckenrad (16) einen Lagersitz (16a) für ein hinteres Lager (24) aufweist, mit dem das Schneckenrad (16) in einem umgebenden Getriebegehäuse (4) gelagert ist,
wobei das hintere Lager als Festlager ausgebildet ist,
**DADURCH GEKENNZEICHNET, DASS** eine Sicherungsscheibe (26') auf dem hinteren Stirnende der Spindel (18) angeordnet ist, wobei die Sicherungsscheibe (26') die einzige Sicherung des hinteren Lagers (24) auf dem Schneckenrad (16) darstellt und gleichzeitig die drehfeste Verbindung der Spindel (18) und des Schneckenrads (16') herstellt, dass die Sicherungsscheibe (26') mit einer Zentralöffnung (26d') auf einen Aufsetzabschnitt des hinteren Endes der Spindel (18) aufgesetzt ist, so dass ein Durchsteckabschnitt des hinteren Endes der Spindel (18) durch die Zentralöffnung (26d') hindurchragt, dass der Durchsteckabschnitt mittels Taumelnieten mit der Sicherungsscheibe (26') formschlüssig verbunden ist.

9. Linearantrieb nach Anspruch 8, **DADURCH GEKENNZEICHNET, DASS** neben der Sicherungsscheibe (26') eine pilzartige Vergrößerung des äußeren Durchmessers der Spindel (18) an ihrem freien Ende gebildet ist.

10. Linearantrieb nach Anspruch 8 oder 9, **DADURCH GEKENNZEICHNET, DASS** der Durchsteckabschnitt etwa 2 - 4 mm über eine hintere Fläche der Sicherungsscheibe (26') hinausragt.

11. Linearantrieb nach einem der Ansprüche 8 bis 10, **DADURCH GEKENNZEICHNET, DASS** die Zentralöffnung (26d') der Sicherungsscheibe (26') profiliert oder unrund ausgebildet ist.

12. Linearantrieb nach einem der Ansprüche 8 bis 11, **DADURCH GEKENNZEICHNET, DASS** zwischen der Zentralöffnung (26d') der Sicherungsscheibe (26') und einer äu-βeren Mantelfläche der Spindel (18) eine Spielpassung ausgebildet ist.

13. Linearantrieb nach einem der Ansprüche 8 bis 12, **DADURCH GEKENNZEICHNET, DASS** an einer inneren Umfangsfläche der Sicherungsscheibe (26') mindestens eine Ausnehmung (26a', 26b', 26c') vorgesehen ist, in welche in Einbaulage ein komplementär ausgebildeter Vorsprung (16a', 16b', 16c') des Schneckenrads (16') eingreift.

14. Linearantrieb nach einem der Ansprüche8 bis 13, **DADURCH GEKENNZEICHNET, DASS** die Sicherungsscheibe (26') einen Teil des einen Innenrings des hinteren Lagers (24) bildet.

15. Linearantrieb nach einem der vorhergehenden Ansprüche, **DADURCH GEKENNZEICHNET, DASS** zwischen dem Schneckenrad (16: 16') und dem Führungsrohr (6) ein vorderes Gleitlager ausgebildet ist.

## Claims

1. Linear drive with an electric motor that drives an endless screw (14),
a worm wheel (16) driven by the endless screw (14) that is non-rotatably connected with a spindle (18), extending along a linear drive longitudinal axis or an axis of rotation, that has a rear and a front end face,
a spindle nut (20) connected with a lifting tube (8) and placed on the spindle (18),
a guide tube (6) that receives the lifting tube (8) in a relatively movable manner, wherein the lifting tube (8) is displaceable from a retracted position inserted in the guide tube (6) to an extended position extended out of this guide tube (6), wherein the worm wheel (16) has a bearing seat (16a) for a rear bearing (24) with which the worm wheel (16) is supported in a surrounding gearbox (4), wherein the rear bearing is configured as a fixed bearing,
**characterized in that** a lock washer (26) is placed at the rear end face of the spindle (18),
wherein the lock washer (26) constitutes the single locking device of the rear bearing (24) on the worm wheel (16) and simultaneously establishes the non-rotatable connection of the spindle (18) and of the worm wheel (16)
and
that the spindle (18) is made of a weldable material and that the lock washer (26) is materially connected to the spindle (18) by welding.

2. Linear drive according to claim 1, **characterized in that** the lock washer (26) has a central opening (26c) so that the lock washer (26) rests flat in a peripheral edge portion at the rear end face of the spindle (18) to form a coverage.

3. Linear drive according to claim 1 or 2, **characterized in that** the material connection is realized by upset welding.

4. Linear drive according to claim 1 or 2, **characterized in that** the material connection is made by welding with a filler material.

5. Linear drive according to one of the claims 1 to 4, **characterized in that** at least one pairing of a projection and a complementary recess or opening intermeshing in mounting position is provided between the lock washer (26) and the worm wheel (16).

6. Linear drive according to claim 5, **characterized in that** at least one recess (26a, 26b) is provided on an outer peripheral surface of the lock washer (26) into which a complementarily configured projection (16b, 16c) of the worm wheel (16) engages in mounting position.

7. Linear drive according to claim 6, **characterized in that** the lock washer (26) has two diametrically opposed recesses (26a, 26b) on the outer peripheral surface into which complementarily configured projections (16b, 16c) of the worm wheel (16) engage.

8. Linear drive with an electric motor that drives an endless screw (14),
a worm wheel (16) driven by the endless screw (14) that is non-rotatably connected with a spindle (18), extending along a linear drive longitudinal axis or an axis of rotation, that has a rear and a front end face,
a spindle nut (20) connected with a lifting tube (8) and placed on the spindle (18),
a guide tube (6) that receives the lifting tube (8) in a relatively movable manner, wherein the lifting tube (8) is displaceable from a retracted position inserted in the guide tube (6) to an extended position extended out of this guide tube (6), wherein the worm wheel (16) has a bearing seat (16a) for a rear bearing (24) with which the worm wheel (16) is supported in a surrounding gearbox (4), wherein the rear bearing is configured as a fixed bearing,
**characterized in that** a lock washer (26)' is placed at the rear end face of the spindle (18), wherein the lock washer (26') constitutes the single locking device of the rear bearing (24) on the worm wheel (16) and simultaneously establishes the non-rotatable connection of the spindle (18) and of the worm wheel (16'), that the lock washer (26') is set with a central opening (26d') onto a setting portion of the rear end of the spindle (18) so that a through portion of the rear end of the spindle (18) protrudes through the central opening (26d'), that the through portion is materially connected to the lock washer (26') by means of wobble rivets.

9. Linear drive according to claim 8, **characterized in that** a mushroom-shaped enlargement of the outer diameter of the spindle (18) is formed at the free end thereof besides the lock washer (26').

10. Linear drive according to claim 8 or 9, **characterized in that** the through portion protrudes by approximately 2 to 4 mm over a rear surface of the lock washer (26').

11. Linear drive according to one of the claims 8 to 10, **characterized in that** the central opening (26d') of the lock washer (26') is configured profiled or non-circular.

12. Linear drive according to one of the claims 8 to 11, **characterized in that** a clearance fit is formed between the central opening (26d') of the lock washer (26') and an outer later surface of the spindle (18).

13. Linear drive according to one of the claims 8 to 12, **characterized in that** at least one recess (26a', 26b', 26c') is provided on an inner peripheral surface of the lock washer (26'), recess into which a complementarily configured projection (16a', 16b', 16c') of the worm wheel (16') engages in mounting position.

14. Linear drive according to one of the claims 8 to 123 **characterized in that** the lock washer (26') forms a part of the one inner ring of the rear bearing (24).

15. Linear drive according to one of the preceding claims, **characterized in that** a front sliding bearing is configured between the worm wheel (16 ; 16') and the guide tube (6).

## Revendications

1. Entraînement linéaire avec un moteur électrique qui entraîne une vis sans fin (14),
une roue hélicoïdale (16) engrenée par la vis sans fin (14), qui est reliée immobile en rotation à une broche (18), qui s'étend le long d'un axe de l'entraînement linéaire ou d'un axe de rotation, qui présente une extrémité frontale postérieure et une extrémité frontale antérieure,
un écrou de broche (20) relié à un tube de levage (8) et qui passe sur la broche (18), un tube de guidage (6) qui loge le tube de levage (8) avec un mouvement relatif, cependant que le tube de levage (8) peut se déplacer à partir d'une position rentrée rétractée dans le tube de guidage (6) dans une position déployée sortie de ce tube de guidage (6), cependant que la roue hélicoïdale (16) présente un siège de palier (16a) pour un palier postérieur (24) avec lequel la roue hélicoïdale (16) est montée dans un carter d'engrenage (4) qui l'entoure, le palier postérieur étant configuré comme un palier fixe,
**caractérisé en ce qu'**une rondelle de sécurité (26) est placée sur l'extrémité frontale postérieure de la broche (18),
cependant que la rondelle de sécurité (26) constitue la seule sécurité du palier postérieur (24) sur la roue hélicoïdale (16) et établit simultanément la liaison immobile en rotation de la broche (18) et de la roue hélicoïdale (16)
et
que la broche (18) est constituée par un matériau soudable et que la rondelle de sécurité (26) est reliée par liaison de matière par soudage à la broche (18).

2. Entraînement linéaire selon la revendication 1, **caractérisé en ce que** la rondelle de sécurité (26) présente un orifice central (26c) si bien que la rondelle de sécurité (26) repose à plat contre l'extrémité frontale postérieure de la broche (18) dans une zone marginale circonférentielle pour former un recouvrement.

3. Entraînement linéaire selon la revendication 1 ou 2, **caractérisé en ce que** la liaison de matière est réalisée par soudage par résistance bout-à-bout.

4. Entraînement linéaire selon la revendication 1 ou 2, **caractérisé en ce que** la liaison de matière est réalisée par soudage avec un matériau d'apport.

5. Entraînement linéaire selon l'une des revendications 1 à 4, **caractérisé en ce qu'**il est prévu, entre la rondelle de sécurité (26) et la roue hélicoïdale (16), au moins un accouplement de saillie et d'évidement ou d'orifice complémentaire qui s'engrène l'un dans l'autre en position de montage.

6. Entraînement linéaire selon la revendication 5, **caractérisé en ce qu'**il est prévu au moins un évidement (26a, 26b) sur une surface circonférentielle extérieure de la rondelle de sécurité (26), évidement dans lequel s'engrène une saillie de configuration complémentaire (16b, 16c) de la roue hélicoïdale (16) en position de montage.

7. Entraînement linéaire selon la revendication 6, **caractérisé en ce que** la rondelle de sécurité (26) présente, sur la surface circonférentielle extérieure, deux évidements diamétralement opposés (26a, 26b) dans lesquels s'engrènent des saillies de configuration complémentaire (16b, 16c) de la roue hélicoïdale (16).

8. Entraînement linéaire avec un moteur électrique qui entraîne une vis sans fin (14),
une roue hélicoïdale (16) engrenée par la vis sans fin (14), qui est reliée immobile en rotation à une broche (18) qui s'étend le long d'un axe de l'entraînement linéaire ou d'un axe de rotation qui présente une extrémité frontale postérieure et une extrémité frontale antérieure,
un écrou de broche (20) relié à un tube de levage (8) et qui passe sur la broche (18),
un tube de guidage (6) qui loge le tube de levage (8) avec un mouvement relatif, cependant que le tube de levage (8) peut se déplacer à partir d'une position rentrée rétractée dans le tube de guidage (6) dans une position déployée sortie de ce tube de guidage (6), cependant que la roue hélicoïdale (16) présente un siège de palier (16a) pour un palier postérieur (24) avec lequel la roue hélicoïdale (16) est montée dans un carter d'engrenage (4) qui l'entoure,
le palier postérieur étant configuré comme un palier fixe,
**caractérisé en ce qu'**une rondelle de sécurité (26') est placée sur l'extrémité frontale postérieure de la broche (18), cependant que la rondelle de sécurité (26') constitue la seule sécurité du palier postérieur (24) sur la roue hélicoïdale (16) et établit simultanément la liaison immobile en rotation de la broche (18) et de la roue hélicoïdale (16'), que la rondelle de sécurité (26') est montée avec un orifice central (26d') sur un tronçon d'appui de l'extrémité postérieure de la broche (18) si bien qu'un tronçon de passage de l'extrémité postérieure de la broche (18) traverse l'orifice central (26d'), que le tronçon de passage est relié par complémentarité de forme à la rondelle de sécurité (26') au moyen de rivets oscillants.

9. Entraînement linéaire selon la revendication 8, **caractérisé en ce qu'**il est formé, près de la rondelle de sécurité (26'), une extension de type champignon du diamètre extérieur de la broche (18) à son extrémité libre.

10. Entraînement linéaire selon la revendication 8 ou 9, **caractérisé en ce que** le tronçon de passage fait saillie d'environ 2 à 4 mm au-delà d'une surface postérieure de la rondelle de sécurité (26').

11. Entraînement linéaire selon l'une des revendications 8 à 10, **caractérisé en ce que** l'orifice central (26d') de la rondelle de sécurité (26') est configuré profilé ou non circulaire.

12. Entraînement linéaire selon l'une des revendications 8 à 11, **caractérisé en ce qu'**il est configuré un ajustement avec jeu entre l'orifice central (26d') de la rondelle de sécurité (26') et une surface d'enveloppe extérieure de la broche (18).

13. Entraînement linéaire selon l'une des revendications 8 à 12, **caractérisé en ce qu'**il est prévu, sur une surface circonférentielle intérieure de la rondelle de sécurité (26'), au moins un évidement (26a', 26b', 26c') dans lequel s'engrène une saillie de configuration complémentaire (16a', 16b', 16c') de la roue hélicoïdale (16') en position de montage.

14. Entraînement linéaire selon l'une des revendications 8 à 13, **caractérisé en ce que** la rondelle de sécurité (26') forme une partie de l'anneau intérieur du palier postérieur (24).

15. Entraînement linéaire selon l'une des revendications précédentes, **caractérisé en ce qu'**un palier coulissant antérieur est configuré entre la roue hélicoïdale (16, 16') et le tube de guidage (6).
